# FASCICULE DE BREVET EUROPEEN

(11) **EP 0 923 175 B1**
(45) Date de publication et mention de la délivrance du brevet: **24.01.2007**
(21) Numéro de dépôt: 98410115.4
(22) Date de dépôt: 07.10.1998
(51) Int. Cl.: H02B 11/10

(54) **Chassis fixe pour un interrupteur electrique debrochable**
Ortsfestes Trenngestell für Leistungschalter
Fixed frame for draw-out type circuit breaker

(30) Priorité: 09.12.1997 FR 9715810
(43) Date de publication de la demande: 16.06.1999
(73) Titulaire: SCHNEIDER ELECTRIC INDUSTRIES SAS, 92500 Rueil-Malmaison (FR)
(72) Inventeur: Louis, Patrice, 38050 Grenoble Cédex 09 (FR); Lemoine, Jocelyn, 38050 Grenoble Cédex 09 (FR)
(74) Mandataire: Jouvray, Marie-Andrée

(56) Documents cités:
- EP-A- 0 133 152
- EP-A- 0 363 564
- EP-A- 0 621 670
- US-A- 4 236 189

## Description

L'invention concerne un châssis fixe pour un interrupteur électrique débrochable, comportant des contacts de signalisation, dont l'état est représentatif des positions embrochée ou débrochée de l'interrupteur et qui sont fixés sur une face interne d'une paroi du châssis.

Les interrupteurs électriques, plus particulièrement les disjoncteurs ou les contacteurs, sont parfois du type débrochable. Ils comportent alors sur le châssis fixe des contacts de signalisation indiquant la position embrochée ou débrochée, ainsi qu'éventuellement une position intermédiaire d'essai de l'appareil. (voir le document US-A-4 236 189).

Dans les appareils connus, le câblage de ces contacts de signalisation est effectué fil à fil lors de l'installation de l'appareil.

L'invention a pour but un dispositif permettant de simplifier le câblage.

Selon l'invention, ce but est atteint par le fait que le châssis comporte un module de communication fixé sur ladite paroi du châssis, à proximité des contacts de signalisation, le module de communication étant connecté électriquement aux contacts de signalisation et comportant des premiers moyens de connexion électriques à un bus de communication, le module constituant une interface de communication entre les contacts de signalisation et le bus.

Selon un perfectionnement de l'invention le module comporte des seconds moyens de connexion électrique à un bus de communication pour la connexion à un bus de communication interne destiné à être connecté à un module de communication supplémentaire solidaire de l'interrupteur, les seconds moyens de connexion étant connectés électriquement aux premiers moyens de connexion à l'intérieur du module de connexion. Le module de communication comporte alors, de préférence, des moyens de guidage du bus de communication interne, par exemple sous la forme d'au moins une gorge.

D'autres avantages et caractéristiques ressortiront plus clairement de la description suivante de différentes modes de réalisation donnés à titre d'exemples non limitatifs et représentés sur les dessins annexés dans lesquels :
- La figure 1 représente le châssis fixe d'un disjoncteur débrochable selon l'art antérieur.
- la figure 2 représente un disjoncteur selon l'art antérieur, destiné à être embroché sur le châssis de la figure 1.
- la figure 3 illustre schématiquement les connexions électriques entre un disjoncteur selon la figure 2 et un châssis selon la figure 1.
- la figure 4 représente, en coupe, un mode de réalisation particulier d'un châssis fixe selon l'invention comportant un module de communication.
- la figure 5 illustre, sous forme de schéma-bloc, un module de communication d'un châssis selon la figure 4, communiquant avec un superviseur et avec un module de communication supplémentaire solidaire du disjoncteur.
- la figure 6 représente, en perspective, un mode particulier de réalisation d'un module de communication selon les figures 4 et 5.

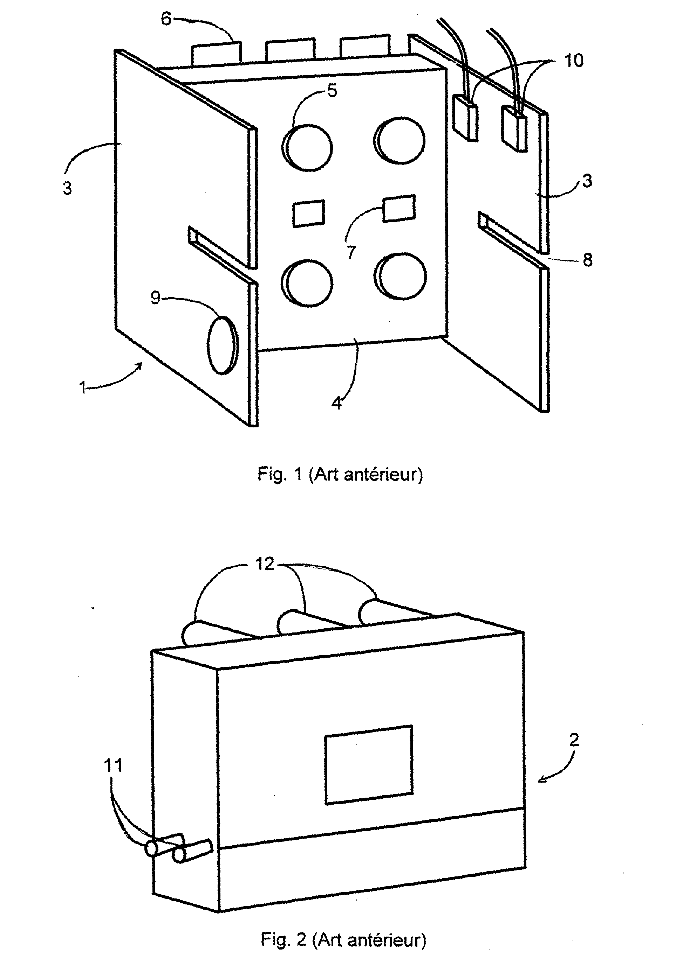

Sur la figure 1, le châssis fixe 1, de type connu (EP-A-620 625), sur lequel est destiné à être monté un disjoncteur 2, comporte deux parois latérales 3. Celles-ci sont constituées par deux flasques fixes, fixées parallèlement sur deux côtés d'un socle de raccordement 4. Le socle de raccordement 4 est pourvu de bornes de raccordement 5, électriquement connectées à des plages 6 de raccordement à un réseau électrique à protéger.

Le châssis 1 comporte également les parties fixes 7 de blocs de débrochage destinés au raccordement de blocs auxiliaires montés dans le disjoncteur.

Chaque paroi latérale 3 comporte une gorge de guidage 8 et une poignée externe 9. Des contacts de signalisation 10 de l'état embroché/débroché du disjoncteur sont fixés sur la face interne de l'une des parois 3.

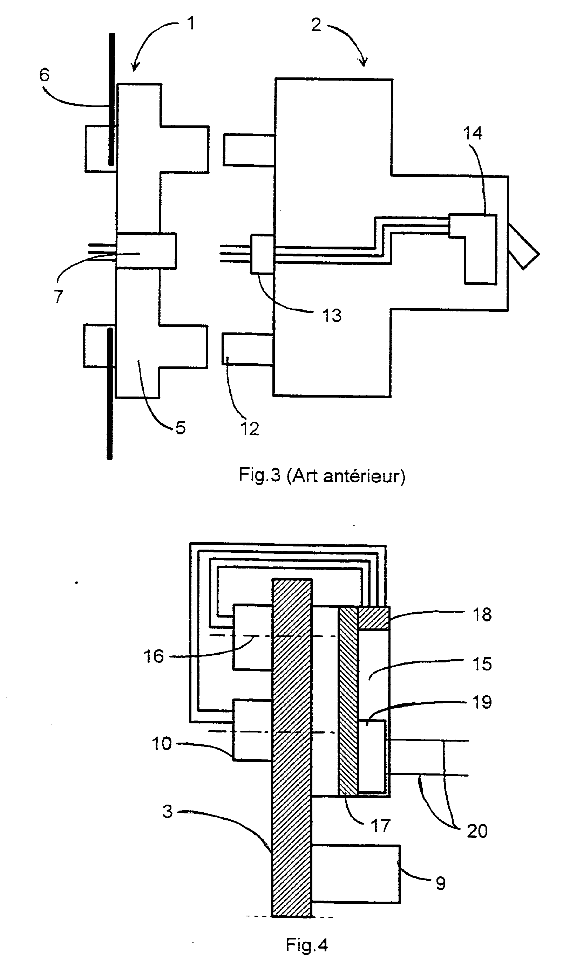

Le disjoncteur 2 comporte, sur ses parois latérales, des axes d'entraînement 11. Il comporte également sur sa paroi arrière, des broches 12 de raccordement et les parties mobiles (13) des blocs de débrochage (figure 3).

Pour l'embrochage du disjoncteur 2 sur le châssis fixe 1, les axes d'entraînement 11 sont introduits et guidés dans les gorges de guidage 8. Le disjoncteur peut ainsi être déplacé en translation selon un axe perpendiculaire au socle de raccordement 4, entre une position dans laquelle il est débroché et une position dans laquelle il est embroché sur le socle 4. Lors de l'embrochage, les broches 12 se connectent dans les bornes 5, et les parties fixes 7 et mobiles 13 des blocs de débrochage se raccordent les unes aux autres. En position embrochée, le disjoncteur est ainsi automatiquement connecté aux plages 6. Les contacts auxiliaires 14 du disjoncteur, connectés aux parties 13 des blocs débrochables à l'intérieur du disjoncteur, sont également automatiquement connectés aux parties fixes 7 des blocs débrochables qui peuvent être connectés, fil à fil, à des organes externes de supervision de signalisation.

Comme représenté schématiquement à la figure 1, les contacts de signalisation 10 peuvent être connectés fil à fil à des organes externes de signalisation ou de supervision. Ces contacts, constitués par exemple par des micro-contacts de fin de course, fournissent des signaux correspondant à la position du disjoncteur, embroché, débroché ou en position intermédiaire d'essai.

Dans le mode de réalisation particulier de l'invention illustré à la figure 4, une des parois latérales 3 du châssis fixe comporte un module de communication 15. Le module 15 est fixé sur la face externe de la paroi 3 qui porte, sur sa face interne, les contacts de signalisation 10. Des organes de fixation communs, par exemple, quatre vis, servent simultanément à la fixation des contacts 10 et du module 15. Sur la figure 4, seuls les axes de fixation 16 correspondants sont schématisés. Le module 15 comporte une carte de traitement 17 sur laquelle est monté un premier connecteur 18, par exemple constitué par un bornier à vis, auquel sont connectés les contacts de signalisation 10. Le module 15 comporte au moins un second connecteur 19, destiné à la connexion à un bus de communication 20, par exemple de type BatiBUS ou JBUS. Le module 15 constitue une interface de communication entre les contacts de signalisation 10 et le bus externe 20.

L'épaisseur du module 15 est de préférence inférieure ou égale à celle des poignées 9 du châssis 1, de sorte que la fixation du module 15 sur le châssis ne modifie pas le volume de celui-ci.

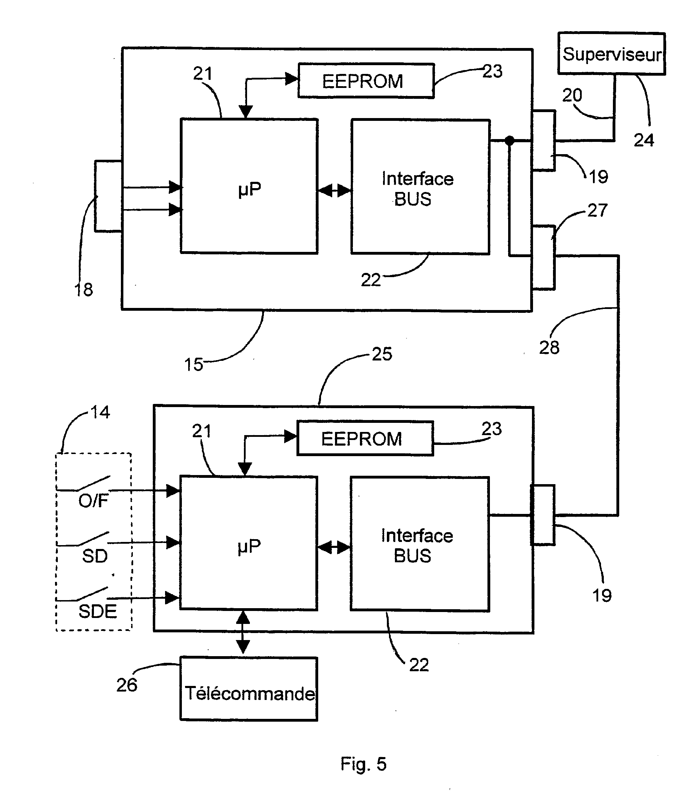

La figure 5 illustre plus en détail le schéma électrique du module 15. Il comporte, sur la carte de traitement 17, un circuit logique constitué de préférence par un microprocesseur 21 connecté par un interface 22 au second connecteur 19. L'interface 22 peut éventuellement être réalisée sous forme logicielle et être intégrée au microprocesseur 21. Le microprocesseur est également connecté au premier connecteur 18. Il peut ainsi transmettre les états des contacts de signalisation 10 au bus 20. Le module 15 comporte une mémoire 23, de préférence de type EEPROM, associée au microprocesseur 18. Cette mémoire est notamment destinée à mémoriser l'adresse du module 10. Dans un mode de réalisation préférentiel, un processus de téléadressage est effectué automatiquement par un superviseur 24 par l'intermédiaire du bus 20 lors de la mise sous tension du module 10. Si aucune adresse n'est mise en mémoire dans l'EEPROM 23, ou si celle-ci doit être modifiée, le superviseur affecte une adresse au module 15.

Dans certains modes de réalisation, le disjoncteur 2 comporte un module de communication interne 25. Comme représenté sur la figure 5, celui-ci est du même type général que le module 15, avec un microprocesseur 21, une interface 22, une mémoire 23. Il est connecté, d'une part, à des contacts auxiliaires 14 représentatifs de l'état du disjoncteur et d'autre part, à un circuit de télécommande 26. Sur la figure 5, trois contacts auxiliaires sont représentés, représentant respectivement la position ouvert/fermé du disjoncteur (O/F), l'état déclenché du disjoncteur (SD) ou l'état de déclenchement sur défaut électrique (SDE).

Dans le mode de réalisation préférentiel de la figure 5, le module de communication 15 comporte un troisième connecteur 27 connecté à son interface 22 et, par un bus interne 28, au module 25. Ainsi, lorsqu'il est embroché, le disjoncteur communique avec le superviseur 24 par l'intermédiaire du bus 28, des connecteurs 27 et 19, et du bus externe 20. Il peut ainsi transmettre les états des contacts auxiliaires 14 au superviseur 24 et être télécommandé par le superviseur. Les blocs de débrochage (7, 13) des disjoncteurs connus (fig. 3) sont alors inutiles. Les modules 15 et 25 ont de préférence la même adresse, qui leur est fournie simultanément par téléadressage, à partir du superviseur 24.

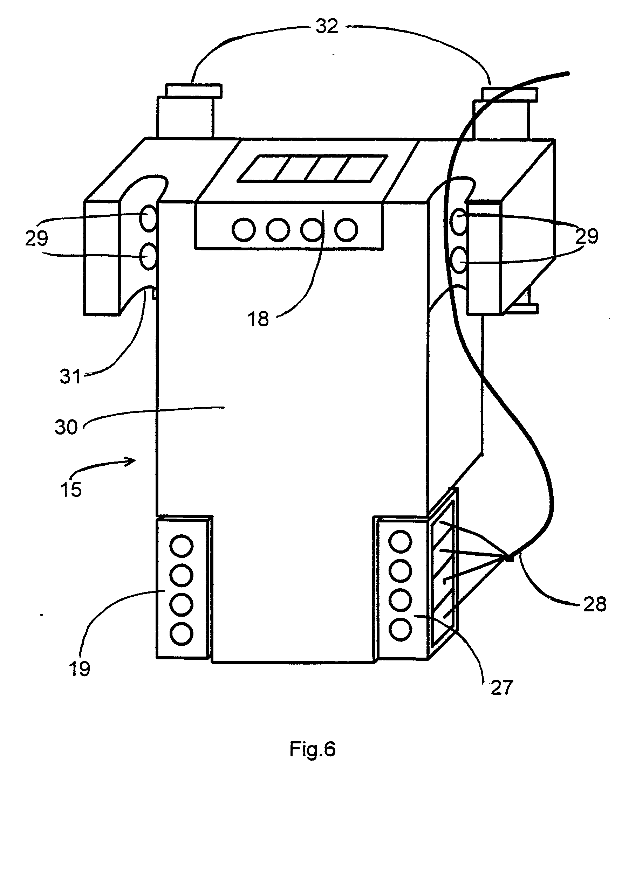

Le mode de réalisation particulier du module de communication 15 représenté à la figure 6 est sensiblement en forme de T. La barre horizontale du T comporte sur ses parties latérales des orifices 29 pour le passage de vis de fixation pour la fixation du module à une des parois 3 du châssis fixe 1. Au centre de la barre horizontale est disposé le connecteur 18, qui est un connecteur de type standard, de manière à ce que la connexion avec les contacts de signalisation 10 aboutisse à la face supérieure de la barre horizontale.

La barre verticale du T a une largeur réduite dans la partie inférieure 30 pour permettre la fixation des connecteurs 19 et 27 de part et d'autre de cette partie inférieure, de préférence dans le même volume. Des gorges de guidage 31 sont formées verticalement dans la barre horizontale du T, de part et d'autre de la barre verticale, pour le guidage des conducteurs du bus 28 arrivant au connecteur 27.

Le câblage du disjoncteur est ainsi très simplifié. Le tableautier n'a à réaliser qu'une seule connexion par le bus 20, entre le châssis fixe 1 et un superviseur 24 et, si le disjoncteur 2 est équipé d'un module de communication interne 25, une seule connexion, par le bus 28, entre le châssis fixe et le disjoncteur.

Le mode de réalisation particulier du module 15 représenté à la figure 6 comporte de plus des moyens particuliers 32 de fixation à une interface de montage, constitués par exemple par des pieds de fixation pour rail DIN. Ceci permet éventuellement d'utiliser un module du type décrit ci-dessus également dans un tableau.

L'invention n'est pas limitée aux modes de réalisation particuliers décrits ci-dessus et s'étend notamment à tout type d'appareil électrique interrupteur débrochable. Le module de communication peut être fixé à la paroi avec d'autres moyens de fixation que les contacts de signalisation, et éventuellement être fixé sur la face interne de la paroi. Plus la proximité entre les contacts de signalisation et le module de communication est grande, plus le câblage est réduit.

## Revendications

1. Châssis fixe pour un interrupteur électrique débrochable, comportant des contacts (10) de signalisation dont l'état est représentatif des positions embrochée ou débrochée de l'interrupteur et qui sont fixés sur une face interne d'une paroi (3) du châssis (1), châssis **caractérisé en ce qu'**il comporte un module de communication (15) fixé sur ladite paroi (3) du châssis (1), à proximité des contacts de signalisation (10), le module de communication (15) étant connecté électriquement aux contacts de signalisation (10) et comportant des premiers moyens de connexion électriques (19) à un bus de communication (20), le module (15) constituant une interface de communication entre les contacts de signalisation (10) et le bus (20).

2. Châssis selon la revendication 1, **caractérisé en ce que** le module de communication (15) est fixé sur la face externe de la paroi (3).

3. Châssis selon la revendication 2, **caractérisé en ce qu'**il comporte des moyens de fixation communs pour la fixation des contacts de signalisation (10) et du module (15) sur la paroi (3).

4. Châssis selon l'une quelconque des revendications précédentes, **caractérisé en ce que** le module (15) comporte des seconds moyens de connexion électrique (27) à un bus de communication, pour la connexion à un bus de communication interne (28) destiné à être connecté à un module de communication supplémentaire (25), solidaire de l'interrupteur (2), les seconds moyens de connexion (27) étant connectés électriquement aux premiers moyens de connexion (19) à l'intérieur du module de connexion (15).

5. Châssis selon la revendication 4, **caractérisé en ce que** le module de communication (15) comporte des moyens de guidage du bus de communication interne (28).

6. Châssis selon la revendication 5, **caractérisé en ce que** les moyens de guidage comportent une gorge (31).

7. Châssis selon l'une quelconque des revendications 4 à 6, **caractérisé en ce que** le module de communication (15) et le module de communication supplémentaire (25) comportent chacun des moyens (23) de mise en mémoire d'une adresse, ladite adresse, fournie par téléadressage par le bus de communication (20), étant identique pour le module de communication (15) et pour un éventuel module de communication supplémentaire (25) qui lui est connecté.

8. Châssis selon l'une quelconque des revendications précédentes, **caractérisé en ce que** le module de communication (15) comporte des moyens de fixation supplémentaires (32) destinés à permettre sa fixation à une interface de montage.

## Claims

1. Fixed frame for a plug-in electrical switch comprising indicating contacts (10) the state whereof is representative of the plugged-in or plugged-out position of the switch and which are fixed to an internal face of a wall (3) of the frame (1), frame **characterized in that** it comprises a communication module (15) fixed to said wall (3) of the frame (1) in proximity to the indicating contacts (10), the communication module (15) being electrically connected to the indicating contacts (10) and comprising first means for electrical connection (19) to a communication bus (20), the module (15) constituting a communication interface between the indicating contacts (10) and the bus (20).

2. Frame according to claim 1, **characterized in that** the communication module (15) is fixed to the external face of the wall (3).

3. Frame according to claim 2, **characterized in that** it comprises common fixing means for fixing the indicating contacts (10) and the module (15) to the wall (3).

4. Frame according to any one of the foregoing claims, **characterized in that** the module (15) comprises second means for electrical connection (27) to a communication bus for connection to an internal communication bus (28) designed to be connected to an additional communication module (25) integral to the switch (2), the second means for connection (27) being electrically connected to the first means for connection (19) inside the connection module (15).

5. Frame according to claim 4, **characterized in that** the communication module (15) comprises means for guiding the internal communication bus (28).

6. Frame according to claim 5, **characterized in that** the guiding means comprise a groove (31).

7. Frame according to any one of the claims 4 to 6, **characterized in that** the communication module (15) and the additional communication module (25) each comprise means (23) for storing an address, said address, supplied by remote addressing via the communication bus (20) being identical for the communication module (15) and for a possible additional communication module (25) that is connected thereto.

8. Frame according to any one of the foregoing claims, **characterized in that** the communication module (15) comprises additional fixing means (32) designed to enable fixing thereof to an assembly interface.

## Patentansprüche

1. Feststehendes Chassis für einen elektrischen Einschubschalter mit Meldekontakten (10), deren Schaltstellung die Betriebsstellung oder die Trennstellung des Schalters abbildet und die auf der Innenseite einer Wand (3) des Chassis (1) befestigt sind, welches Chassis **dadurch gekennzeichnet ist, dass** es ein an der genannten Wand (3) des Chassis (1), in der Nähe der Meldekontakte (10) befestigtes Kommunikationsmodul (15) umfasst, welches Kommunikationsmodul (15) mit den Meldekontakten (10) elektrisch verbunden ist und erste Verbindungsmittel zur elektrischen Verbindung (19) mit einem Kommunikationsbus (20) umfasst, wobei das Modul (15) eine Kommunikationsschnittstelle zwischen den Meldekontakten (10) und dem Bus (20) bildet.

2. Chassis nach Anspruch 1, **dadurch gekennzeichnet, dass** das Kommunikationsmodul (15) an der Außenseite der Wand (3) befestigt ist.

3. Chassis nach Anspruch 2, **dadurch gekennzeichnet, dass** es gemeinsame Befestigungsmittel zur Befestigung der Meldekontakte (10) und des Moduls (15) an der Wand (3) umfasst.

4. Chassis nach irgendeinem der vorhergehenden Ansprüche, **dadurch gekennzeichnet, dass** das Modul (15) zweite Verbindungsmittel (27) zur elektrischen Verbindung mit einem Kommunikationsbus umfasst, die zum Anschluss an einen internen Kommunikationsbus (28) dienen, der seinerseits dazu dient, mit einem fest mit dem Schalter (2) verbundenen zusätzlichen Kommunikationsbus (25) verbunden zu werden, wobei die zweiten Verbindungsmittel (27) im Inneren des Anschlussmoduls (15) elektrisch mit den ersten Verbindungsmitteln (19) verbunden sind.

5. Chassis nach Anspruch 4, **dadurch gekennzeichnet, dass** das Kommunikationsmodul (15) Führungsmittel zur Führung des internen Kommunikationsbusses (28) umfasst.

6. Chassis nach Anspruch 5, **dadurch gekennzeichnet, dass** die Führungsmittel eine Kehle (31) umfassen.

7. Chassis nach irgendeinem der Ansprüche 4 bis 6, **dadurch gekennzeichnet, dass** das Kommunikationsmodul (15) und das zusätzliche Kommunikationsmodul (25) jeweils Mittel (23) zur Speicherung einer Adresse umfassen, welche durch Fernadressierung über den Kommunikationsbus (20) gelieferte Adresse für das Kommunikationsmodul (15) die gleiche ist wie für ein gegebenenfalls mit diesem verbundenen zusätzlichen Kommunikationsmodul (25).

8. Chassis nach irgendeinem der vorhergehenden Ansprüche 4, **dadurch gekennzeichnet, dass** das Kommunikationsmodul (15) zusätzliche Befestigungsmittel (32) umfasst, die dazu dienen, seine Befestigung an einer Montagevorrichtung zu ermöglichen.
